(19) Europäisches Patentamt / European Patent Office / Office européen des brevets

(11) **EP 3 671 610 A1**

(12) **EUROPEAN PATENT APPLICATION**
published in accordance with Art. 153(4) EPC

(43) Date of publication:
**24.06.2020 Bulletin 2020/26**

(21) Application number: **17927091.3**

(22) Date of filing: **18.12.2017**

(51) Int Cl.:
*G06Q 30/06* (2012.01)

(86) International application number:
**PCT/CN2017/116878**

(87) International publication number:
**WO 2019/061867 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **29.09.2017 CN 201710906602**

(71) Applicant: **Beijing Sankuai Online Technology Co., Ltd**
**Beijing 100080 (CN)**

(72) Inventor: **LIU, Haiwen**
**Beijing 100080 (CN)**

(74) Representative: **Manitz Finsterwald**
**Patent- und Rechtsanwaltspartnerschaft mbB**
**Martin-Greif-Strasse 1**
**80336 München (DE)**

(54) **DETERMINATION OF SIMILARITY BETWEEN USER AND MERCHANT**

(57) This application provides a method and an apparatus for determining a similarity between a user and a merchant and an electronic device. According to an embodiment, the method includes: determining first amount distribution of a user based on first historical orders of the user; determining second amount distribution of a merchant based on second historical orders of the merchant; and determining a similarity between the user and the merchant based on the first amount distribution and the second amount distribution.

```
┌─────────────────────────────────────────────┐
│ Determine first amount distribution of a      │  101
│ user based on first historical orders of      │
│ the user                                      │
└─────────────────────────────────────────────┘
                     │
                     ▼
┌─────────────────────────────────────────────┐
│ Determine second amount distribution of a     │  102
│ merchant based on second historical orders    │
│ of the merchant                               │
└─────────────────────────────────────────────┘
                     │
                     ▼
┌─────────────────────────────────────────────┐
│ Determine a similarity between the user and   │  103
│ the merchant based on the first amount        │
│ distribution and the second amount            │
│ distribution                                  │
└─────────────────────────────────────────────┘
```

FIG. 1

EP 3 671 610 A1

**Description**

**CROSS REFERENCE TO RELATED APPLICATION**

This application claims the priority to Chinese Patent Application No. 201710906602.7, entitled "METHOD AND APPARATUS FOR DETERMINING SIMILARITY BETWEEN USER AND MERCHANT AND ELECTRONIC DEVICE" filed on September 29, 2017, which is incorporated by reference herein in its entirety

**TECHNICAL FIELD**

This application relates to determining of a similarity between a user and a merchant.

**BACKGROUND**

When a user shops through a shopping application (APP), a transaction amount generated in each transaction is generated by the user according to a purchase requirement at that time, and therefore the transaction amount generated by each transaction is not fixed. For the user, a consumption level of the user may reflect the consumption ability of the user. For a merchant registered in the APP, a consumption level of the merchant may reflect a price level of a commodity or service provided for the user by the merchant. Because the transaction amount generated by each transaction of the user is not fixed, a server providing the APP may not be able to predict the consumption ability of the user based on the consumed transaction amount of the user, and consequently, a similarity between the user and the merchant cannot be determined.

**SUMMARY**

In view of this, this application provides a method and an apparatus for determining a similarity between a user and a merchant, and an electronic device, so that a consumption level of a user can be reflected in more details, and a matching degree between the user and a merchant can be indicated relatively accurately using a similarity between the user and the merchant.

To achieve the foregoing objective, this application provides the following technical solutions.

According to a first aspect of this application, a method for determining a similarity between a user and a merchant is provided, including:

determining first amount distribution of the user based on first historical orders of the user;
determining second amount distribution of the merchant based on second historical orders of the merchant; and
determining a similarity between the user and the merchant based on the first amount distribution and the second amount distribution.

According to a second aspect of this application, an apparatus for determining a similarity between a user and a merchant is provided, including:

a first determining module configured to determine first amount distribution of the user based on first historical orders of the user;
a second determining module configured to determine second amount distribution of the merchant based on second historical orders of the merchant; and
a third determining module configured to determine a similarity between the user and the merchant based on the first amount distribution determined by the first determining module and the second amount distribution determined by the second determining module.

According to a third aspect of this application, a computer readable storage medium is provided. The computer readable storage medium stores a computer executable instruction that, when invoked and executed by a processor, causes the processor to perform the method that is used for determining a similarity between a user and a merchant and that is provided in the foregoing first aspect.

According to a fourth aspect of this application, an electronic device is provided. The electronic device includes:

a processor; and a memory configured to store an instruction executed by the processor; where
the processor is configured to perform the method that is used for determining a similarity between a user and a merchant and that is provided in the foregoing first aspect.

It can be seen from the foregoing technical solutions that, because the first amount distribution may be used to indicate a consumption level of the user, and the second amount distribution may be used to indicate a price level of a commodity or service provided by the merchant, the consumption level of the user may be reflected in more details by using the first amount distribution, and the price level of the commodity or the service provided by the merchant may be reflected more accurately by using the second amount distribution. Further, the matching degree between the user and the merchant may be indicated accurately by using the similarity between the user and the merchant.

**BRIEF DESCRIPTION OF THE DRAWINGS**

FIG. 1 is a schematic flowchart of a method for determining a similarity between a user and a merchant according to an exemplary embodiment of this application.
FIG. 2A is a schematic flowchart of a method for determining a similarity between a user and a merchant according to another exemplary embodiment of this application.
FIG. 2B is a schematic diagram of first probability density distribution in an embodiment shown in FIG. 2A.
FIG. 3 is a schematic flowchart of a method for determining first amount distribution of a user based on first historical orders according to an exemplary embodiment of this application.
FIG. 4 is a schematic flowchart of a method for determining first amount distribution of a user based on amount distribution of each first group according to an exemplary embodiment of this application.
FIG. 5 is a schematic flowchart of a method for determining second amount distribution based on second historical orders according to an exemplary embodiment of this application.
FIG. 6 is a schematic flowchart of a method for recommending a merchant matching a user to the user based on a similarity between a user and a merchant according to an exemplary embodiment of this application.
FIG. 7 is a schematic structural diagram of hardware of an electronic device according to an exemplary embodiment of this application.
FIG. 8 is a schematic structural diagram of an apparatus for determining a similarity between a user and a merchant according to an exemplary embodiment of this application.
FIG. 9 is a schematic structural diagram of an apparatus for determining a similarity between a user and a merchant according to another exemplary embodiment of this application.

**DETAILED DESCRIPTION OF THE EMBODIMENTS**

Exemplary embodiments are described in detail herein, and examples of the exemplary embodiments are shown in the accompanying drawings. When the following descriptions relate to the accompanying drawings, unless indicated otherwise, same numbers in different accompanying drawings represent same or similar elements. The implementations described in the following exemplary embodiments do not represent all implementations consistent with this application. On the contrary, the implementations are merely examples of apparatuses and methods that are described in detail in the appended claims and that are consistent with some aspects of this application.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if" as used herein may be interpreted as "when ..." or "upon ..." or "in response to determining."

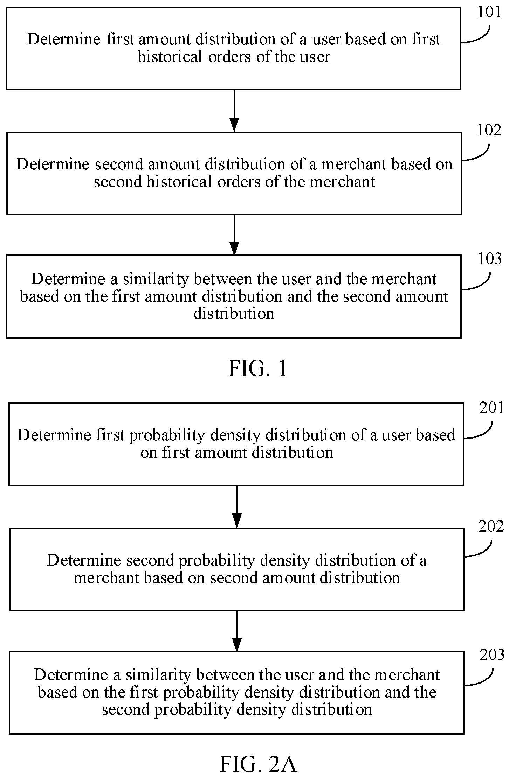

FIG. 1 is a schematic flowchart of a method for determining a similarity between a user and a merchant according to an exemplary embodiment of this application. The method may be applied to a server, and the server may provide a user with an APP for service such as shopping and catering. When the user shops through the APP, the server may recommend, to the user by using this method, a merchant matching a consumption level of the user. As shown in FIG. 1, the method may include the following steps.

Step 101: First amount distribution of a user is determined based on first historical orders of the user.

In an embodiment, the first historical orders may be all orders placed by the user through the APP, or may be orders placed by the user through the APP within a set time period. Accordingly, the first amount distribution may be determined based on the first historical orders. The server may record the first historical orders placed by the user through the APP and an amount paid by the user for each order. For example, if the user places 100 orders through the APP, there are 100 amounts. The server may analyze the 100 amounts to obtain amount distribution corresponding to the 100 orders. The first amount distribution may be displayed by a curve.

In an embodiment, an order quantity of first historical orders may be calculated. If the order quantity of first historical orders meets a first preset condition, overall amount distribution of the user may be determined based on the first historical orders, and then the first amount distribution of the user may be determined based on the overall amount distribution. The overall amount distribution of the user may reflect a consumption level of the user as a whole. The overall amount distribution of the user may be determined based on the orders placed by the user (for example, all the orders placed by the user) through the APP. Alternatively, the overall amount distribution of the user may be determined based on the orders placed by the user (for example, all the orders placed by the user) through the APP within the set time period. If the order quantity of first historical orders is relatively small, the overall amount distribution of the user may be determined as the first amount distribution of the user. In an embodiment, the first preset condition may be that the order quantity of first historical orders is less than or equal to a first preset threshold and is greater than a second preset threshold. The second preset threshold is less than the first preset threshold.

In another embodiment, if the order quantity of first historical orders meets a second preset condition, region amount distribution of a region at which the user is located may be analyzed, and the first amount distribution of the user is determined based on the region amount distribution. In an embodiment, the second preset condition may be that the order quantity of first historical orders is less than the second preset threshold. For a newly registered user, because the order quantity of the first historical orders is relatively small, the first amount distribution of the user may be determined based on the region amount distribution. In this way, a problem that a merchant cannot be recommended to a new user because the new user has no historical order record can be resolved.

Step 102: Second amount distribution of a merchant is determined based on second historical orders of the merchant.

In an embodiment, the second historical orders may be all orders received by the merchant through the APP, or may be orders received by the merchant through the APP within a set time period. The server may record the second historical orders received by the merchant through the APP and amounts of the orders received by the merchant. For example, if the merchant receives 500 orders through the APP, there are 500 amounts. The server may analyze the 500 amounts to obtain amount distribution corresponding to the 500 orders. The second amount distribution may also be displayed by a curve.

Step 103: A similarity between the user and the merchant is determined based on the first amount distribution and the second amount distribution.

In an embodiment, an average value, a maximum value, and a minimum value of the first amount distribution and an average value, a maximum value, and a minimum value of the second amount distribution may be first calculated. Assuming that the average value of the first amount distribution is ave1, the maximum value is max1, and the minimum value is min1, and the average value of the second amount distribution is ave2, the maximum value is max2, and the minimum value is min2. In an embodiment, there may be an overlapping range between an interval [min1, max1] and an interval [min2, max2], and the similarity between the user and the merchant may be obtained by dividing a length of the overlapping range by a length of the interval [min1, max1]. In another embodiment, an absolute value of a difference between the average value ave1 and the average value ave2 may be used to indicate the similarity between the user and the merchant. A smaller difference indicates a higher similarity between the user and the merchant, while a larger difference indicates a lower similarity between the user and the merchant. Therefore, the similarity between the user and the merchant may be determined by using the average value, the maximum value, and/or the minimum value. In another embodiment, respective probability density distribution corresponding to the first amount distribution and the second amount distribution may further be determined based on the first amount distribution and the second amount distribution, and the similarity between the user and the merchant is determined based on the probability density distribution. A merchant matching the consumption level of the user may be determined based on the similarity between the user and the merchant.

In this embodiment, because the first amount distribution may be used to indicate the consumption level of the user, and the second amount distribution may be used to indicate a price level of a commodity or service provided by the merchant, the consumption level of the user may be reflected in more detail by using the first amount distribution, and the price level of the commodity or the service provided by the merchant may be reflected more accurately by using the second amount distribution. Further, the similarity between the user and the merchant may be indicated relatively accurately by using the first amount distribution and the second amount distribution.

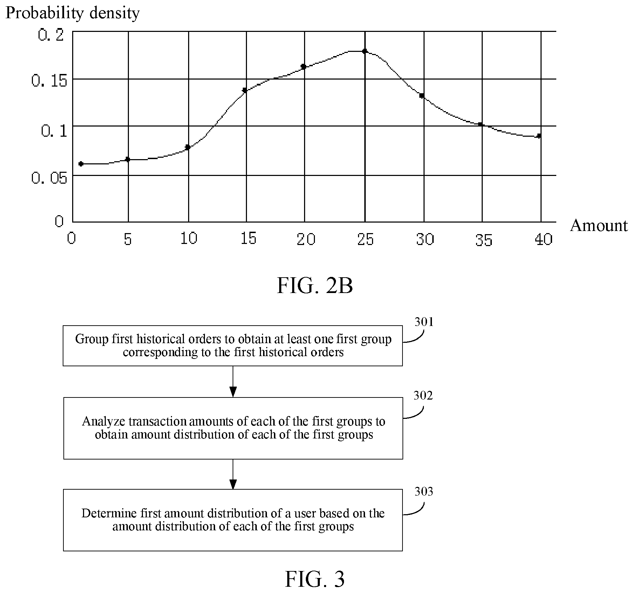

FIG. 2A is a schematic flowchart of a method for determining a similarity between a user and a merchant according to another exemplary embodiment of this application. FIG. 2B is a schematic diagram of first probability density distribution in the embodiment shown in FIG. 2A. In this method, a similarity between a user and a merchant may be determined based on first amount distribution and second amount distribution. As shown in FIG. 2A, the method may include the following steps.

Step 201: First probability density distribution of the user is determined based on the first amount distribution.

In an embodiment, a probability of each amount may be calculated based on the first amount distribution, and then probability density distribution of each amount may be calculated by using probability distribution of each amount, so that an area of a first probability density distribution curve along a horizontal axis is 1. FIG. 2B is a schematic diagram of the first probability density distribution curve. A horizontal axis indicates an amount, a vertical axis indicates probability density corresponding to an amount, and the area between the first probability density distribution curve and the horizontal axis is a unit 1.

Step 202: Second probability density distribution of the merchant is determined based on the second amount distribution.

For description of determining the second probability density distribution based on the second amount distribution, refer to the description of the step 201. Similarly, the second probability density distribution of the merchant may be obtained by using the second amount distribution.

Step 203: A similarity between the user and the merchant is determined based on the first probability density distribution and the second probability density distribution.

In an embodiment, an overlapping area of the first probability density distribution and the second probability density distribution may be determined, and the similarity between the user and the merchant may be determined based on the overlapping area. Further, first confidence of the user may be determined based on distribution of orders of the user, second confidence of the merchant may be determined based on distribution of orders of the merchant, and the similarity between the user and the merchant may be determined based on the overlapping area, the first confidence and the second confidence. The first confidence and the second confidence may respectively indicate a credibility degree, or referred to as a confidence level, of probability density distribution of the orders of the user and a credibility degree of probability density distribution of the orders of the merchant in an interval . The more centralized the distribution of orders is, higher confidence can be set. For example, if the transaction amounts in the orders are densely distributed between 50 yuan and 60 yuan, confidence in the interval may be set to 0.95. For example, if the overlapping area is m, the first confidence is a1, and the second confidence is a2, the similarity between the user and the merchant may be a1 × a2 × m. The similarity between the user and the merchant is determined by using the first confidence, the second confidence, and the overlapping area, so that reliability of the similarity between the user and the merchant can be greatly improved.

In this embodiment, when a fluctuation range of respective transaction amounts of the user and the merchant is relatively large, the similarity between the user and the merchant may be determined by using the overlapping area. Because the overlapping area indicates an overlapping degree between the probability density distribution of the orders of the user and the probability density distribution of the orders of the merchant, measurement of the similarity may be more accurate.

FIG. 3 is a schematic flowchart of a method for determining first amount distribution of a user based on first historical orders according to an exemplary embodiment of this application. The method may be implemented when an order quantity of first historical orders is greater than a first preset threshold. As shown in FIG. 3, the method may include the following steps.

Step 301: The first historical orders are grouped to obtain at least one first group corresponding to the first historical orders.

In an embodiment, the first historical orders may be grouped based on a preset first group. For example, the preset first group may include: cake, fast food, clothing, stretched noodles, and the like. There are 100 first historical orders. After the 100 orders are grouped, it is found through analysis that there are 20 orders for cakes, there are 40 orders for fast food, there are 15 orders for clothing, and there are 25 orders for noodles. Each first group may include order information corresponding to the group.

Step 302: Analyze transaction amounts of each first group to obtain amount distribution of each of the first groups.

Corresponding to the foregoing step 301, consumption amounts corresponding to the 20 orders for cakes, consumption amounts corresponding to the 40 orders for fast food, consumption amounts corresponding to the 15 orders for clothing, and consumption amounts corresponding to the 25 orders for noodles are analyzed. Consequently, distribution of amounts correspond to each of the cakes, the fast food, the noodles and the clothing in a first group may be obtained.

In an embodiment, an order corresponding to each transaction amount in the first group and an ordering time point of each order may be determined based on the amount distribution of each first group, and time decay is performed on the order corresponding to each transaction amount in the first group based on the ordering time point of each order. For example, the time decay may be performed, according to the following formula (1), on the order corresponding to each transaction amount in the first group based on the ordering time point of each order:

$$weighted\_order\_num(price) = \sum_{i \in order(price)} \lambda^{now-t(i)} \quad \text{Formula (1)}$$

*weighted_order_num(price)* may indicate an order quantity on which time decay is performed and that corresponds to an transaction amount (price), *order(price)* may indicate all orders of the transaction amount (price), $\lambda$ indicates a time decay coefficient that is a positive number less than 1, *now-t(i)* indicates a time difference between an ordering time point of an order i and a current time point. By performing the time decay on the order corresponding to each transaction amount in the first group based on the ordering time point of each order, a proportion of each order in the first group in the amount distribution of the first group may be adjusted according to a time sequence. Because an amount corresponding to an order that is relatively close to the current time point can reflect a consumption trend of the user, so that through the time decay, a proportion of the amount corresponding to the order that is relatively close to the current time point in the amount distribution of each first group may be increased, and a proportion of an amount that is in the amount distribution of each first group and that corresponds to an order that is relatively far from the current time point and may be reduced, causing adjusted amount distribution of each first group may reflect a consumption tendency of the user more accurately.

Step 303: The first amount distribution of the user is determined based on the amount distribution of each of the first groups.

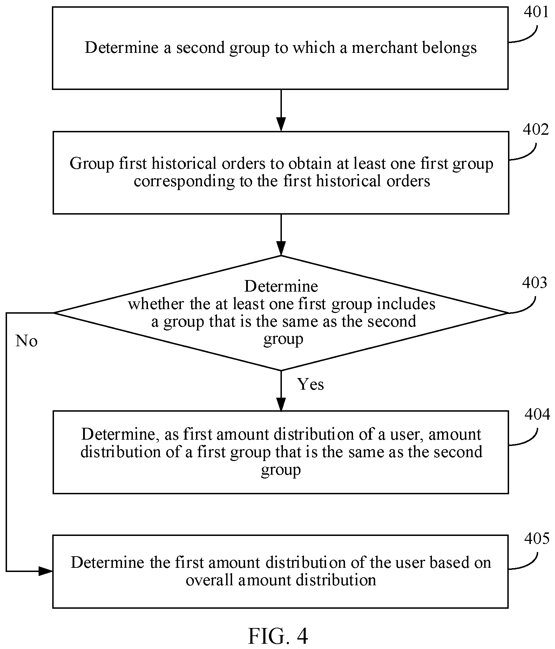

For description of step 303, reference may be made to the description of the following embodiment shown in FIG. 4, and details are not described herein.

In an embodiment, with reference to FIG. 2B, after overall amount distribution is obtained, an ordering time point of an order corresponding to each transaction amount may be determined from the overall amount distribution, and time decay is performed on the order corresponding to each transaction amount based on an ordering time point of each order. In an embodiment, the time decay may be performed on the order corresponding to each transaction amount in the overall amount distribution based on the ordering time point of each order in a manner described in the foregoing step 302. Details are not described herein again.

In this embodiment, the first historical orders are grouped to obtain the at least one first group corresponding to the first historical orders. The orders of the user are precisely classified based on each of the first groups, so that the amount distribution of each of the first groups can more accurately indicate a consumption level and a consumption preference of the user.

FIG. 4 is a schematic flowchart of a method for determining first amount distribution of a user based on amount distribution of each of the first groups according to an exemplary embodiment of this application. As shown in FIG. 4, the method may include the following steps.

Step 401: A second group to which a merchant belongs is determined.

In an embodiment, a server may cluster merchants registered to an application, gather similar merchants into one second group based on information such as categories, names, prices of commodities provided by the merchants, so that commodities and/or commodity prices of the merchants in the same second group are similar. The server may record that which merchant belongs to the second group for subsequent calculation.

Step 402: First historical orders are grouped to obtain at least one first group corresponding to the first historical orders.

Similar to the foregoing step 401, the server may identify a commodity name of each of the first historical orders placed by the user, or identify a merchant corresponding to each order, to obtain the at least one first group corresponding to the first historical orders.

Step 403: It is determined whether the at least one first group includes a group that is the same as the second group. If so, step 404 is performed; or if not, step 405 is performed.

For example, in one case, if the at least one first group includes A, B, and C, and the second group is A, the at least one first group includes a group that is the same as the second group, that is, the group A. In another case, if the at least one first group includes A, B, and C, and the second group is D, the at least one first group does not include a group that is the same as the second group.

Step 404: Amount distribution of a first group that is the same as the second group is determined as first amount distribution of a user.

Corresponding to the foregoing step 403, the at least one first group corresponding to the first historical orders includes A, B, and C, the group A being the same as the second group A to which the merchant belongs, so that order information corresponding to the group A may be screened from the first historical orders.

For example, the order information corresponding to the group A in the first historical orders may be analyzed, and amount distribution of the group A may be determined as the first amount distribution of the user, so that the orders of the user may be precisely divided, to prevent a similarity between the user and the merchant from being disturbed by other unrelated orders in the first historical orders.

Step 405: The first amount distribution of the user is determined based on overall amount distribution.

For example, the at least one first group includes A, B, and C, and the second group is D, and in this case, overall amount distribution may be determined as the first amount distribution of the user. Because the overall amount distribution may reflect a consumption level of the user as a whole, the similarity between the user and the merchant may also be determined by using the overall amount distribution and second amount distribution.

In this embodiment, on a premise that whether the at least one first group corresponding to the first historical orders includes the group that is the same as the second group to which the merchant belongs, the first historical orders of the user are precisely divided, so that accuracy of the similarity between the user and the merchant may be ensured from different perspectives.

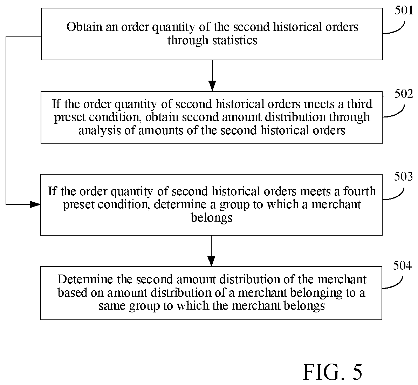

FIG. 5 is a schematic flowchart of a method for determining second amount distribution based on second historical orders according to an exemplary embodiment of this application. As shown in FIG. 5, the method may include the following steps.

Step 501: An order quantity of second historical orders is calculated.

Step 502: If the order quantity of second historical orders meets a third preset condition, the second amount distribution is obtained through analysis of amounts of the second historical orders.

In an embodiment, the third preset condition may be used to indicate that the order quantity of second historical orders is greater than or equal to a third preset threshold. The third preset threshold may be customized by a server. A value of the third preset threshold may determine accuracy of the second amount distribution of the merchant. A larger third preset threshold indicates higher accuracy of the second amount distribution.

Step 503: If the order quantity of second historical orders meets a fourth preset condition, a group to which a merchant belongs is determined.

In an embodiment, the fourth preset condition may be used to indicate that the order quantity of second historical orders is less than the third preset threshold, and in this case, an order quantity of the merchant is insufficient to accurately reflect a price level of a commodity or service provided for the user by the merchant.

Step 504: The second amount distribution of the merchant is determined based on amount distribution of a merchant belonging to a same group to which the merchant belongs.

For example, a group to which a merchant M belongs is "cake". If an order quantity of second historical orders of the merchant M is less than the third preset threshold, it indicates that the merchant M may be a newly registered merchant, and therefore the order quantity is insufficient to indicate an actual price level of a commodity or service provided by the merchant M. In this case, a merchant N (or all merchants in the group) may be found from the group "cake", and second amount distribution of the merchant M is determined by using all orders of the merchant N (or all the merchants in the group).

In this embodiment, if the order quantity of second historical orders meets the fourth preset condition, the second amount distribution of the merchant is determined by using the amount distribution of another merchant belonging to the same group with the merchant belongs, so that a cold start problem that the new merchant cannot be recommended to the user because the new merchant has no historical order record may be resolved.

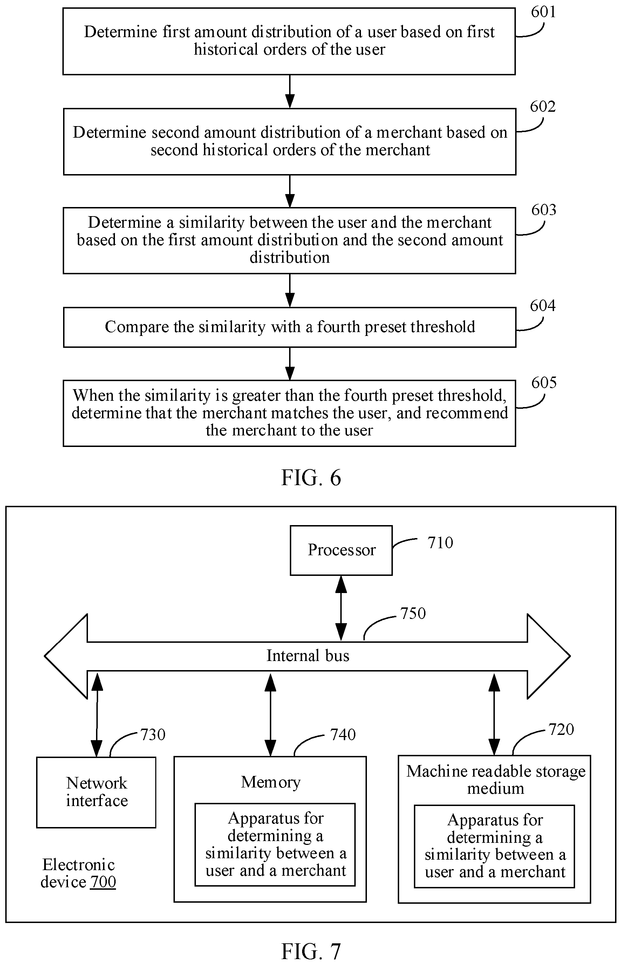

FIG. 6 is a schematic flowchart of a method for recommending a merchant matching a user to the user based on a similarity between a user and a merchant according to an exemplary embodiment of this application. As shown in FIG. 6, the method may include the following steps.

Step 601: First amount distribution of a user is determined based on first historical orders of the user.

Step 602: Second amount distribution of a merchant is determined based on second historical orders of the merchant.

Step 603: A similarity between the user and the merchant is determined based on the first amount distribution and the second amount distribution.

For descriptions of step 601 to step 603, reference may be made to the description of the foregoing embodiment shown in FIG. 1, and details are not described herein again.

Step 604: The similarity between the user and the merchant is compared with a fourth preset threshold.

Step 605: When the similarity between the user and the merchant is greater than the fourth preset threshold, it is determined that the merchant matches the user, and the merchant is recommended to the user.

In step 604 and step 605, for example, 100 merchants are registered on a server, and the server sequentially calculates similarities between the user and each of the 100 merchants according to the foregoing step 601 to step 603, and recommends, to the user, merchants whose similarity is greater than a certain threshold.

In an embodiment, for step 604 and step 605, when a plurality of similarities are obtained by performing step 601 to step 603, the plurality of similarities may be sorted in descending order, a set quantity of similarities are selected from the plurality of similarities, and merchants corresponding to the set quantity of similarities are recommended to the user. For example, if there are 20 similarities and the set quantity is 5, first five similarities may be selected from the 20 similarities, and merchants corresponding to the first five similarities are recommended to user.

In this embodiment, the merchant matching the user is recommended to the user by using the first amount distribution and the second amount distribution, so that it may be ensured that the merchant recommended to the user is closer to a consumption level of the user, to improve accuracy of recommending a merchant to the user.

Corresponding to the foregoing embodiments of the methods for determining a similarity between a user and a merchant, this application further provides an embodiment of an apparatus for determining a similarity between a user and a merchant.

The embodiment of the apparatus for determining a similarity between a user and a merchant in this application may be applied to an electronic device. The apparatus embodiment may be implemented by software, or may be implemented by hardware or a combination of software and hardware. That the apparatus embodiment is implemented by software is used as an example. A logical apparatus is formed through reading a corresponding machine executable instruction in a machine readable storage medium 720 into a memory by a processor 710 of an electronic device 700 in which the apparatus is located. In terms of hardware, FIG. 7 is a structural diagram of hardware of an electronic device in which the apparatus for determining a similarity between a user and a merchant is located. In addition to the processor 710, a memory 740, a network interface 730, an internal bus 750, and the machine readable storage medium 720 shown in FIG. 7, the electronic device 700 in which the apparatus is located in this embodiment may further include other hardware according to an actual function of the electronic device 700. Details are not described herein again.

The processor 710 may be configured to perform the method for determining a similarity between a user and a merchant according to any of the embodiments in FIG. 1 to FIG. 6.

This application further provides a computer readable storage medium storing a computer executable instruction that, when invoked and executed by a processor, causes the processor to perform the method for determining a similarity between a user and a merchant according to any of the embodiments in FIG. 1 to FIG. 6.

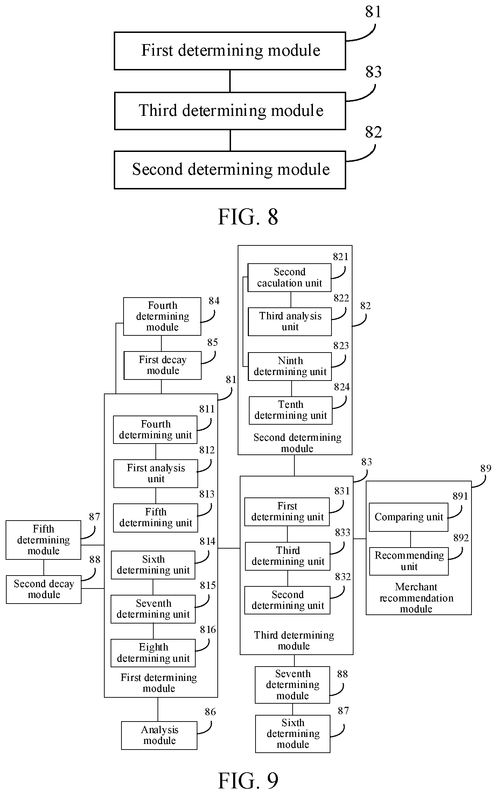

FIG. 8 is a schematic structural diagram of an apparatus for determining a similarity between a user and a merchant according to an exemplary embodiment of this application. As shown in FIG. 8, the apparatus for determining a similarity between a user and a merchant includes:

a first determining module 81 configured to determine first amount distribution of a user based on first historical orders of the user;
a second determining module 82 configured to determine second amount distribution of a merchant based on second historical orders of the merchant; and
a third determining module 83 configured to determine a similarity between the user and the merchant based on the first amount distribution determined by the first determining module 81 and the second amount distribution determined by the second determining module 82.

FIG. 9 is a schematic structural diagram of an apparatus for determining a similarity between a user and a merchant according to another exemplary embodiment of this application. As shown in FIG. 9, on a basis of the embodiment shown in FIG.8, the third determining module 83 may include:

a first determining unit 831 configured to determine first probability density distribution of the user based on the first amount distribution;
a second determining unit 832 configured to determine second probability density distribution of the merchant based on the second amount distribution; and
a third determining unit 833 configured to determine a similarity between the user and the merchant based on the first probability density distribution determined by the first determining unit 831 and the second probability density distribution determined by the second determining unit 832.

In an embodiment, the third determining unit 833 may further be configured to: determine an overlapping area between the first probability density distribution and the second probability density distribution; and determine the similarity between the user and the merchant based on the overlapping area.

In an embodiment, the third determining unit 833 may further be configured to: determine first confidence corresponding to the user and second confidence corresponding to the merchant; and determine the similarity between the user and the merchant based on the overlapping area, the first confidence, and the second confidence.

In an embodiment, the first determining module 81 may include:

a fourth determining unit 811 configured to group first historical orders to obtain at least one first group corresponding to the first historical orders;
a first analysis unit 812 configured to analyze an transaction amount of each first group to obtain amount distribution of each first group; and
a fifth determining unit 813 configured to determine the first amount distribution of the user based on the amount distribution of each first group obtained through analysis by the first analysis unit 812.

In an embodiment, the fifth determining unit 813 may be configured to: determine a second group to which the merchant belongs; and determine, as the first amount distribution of the user, amount distribution of a first group that is the same as the second group.

In an embodiment, the apparatus may further include:

a fourth determining module 84 configured to determine an order corresponding to each transaction amount in the first group and an ordering time point of each order for the amount distribution of each of the first groups; and
a first decay module 85 configured to perform time decay on the order corresponding to each transaction amount in the first group based on the ordering time point of each order.

In an embodiment, the first determining module 81 may include:

a sixth determining unit 814 configured to calculate an order quantity of first historical orders;
a seventh determining unit 815 configured to: if the order quantity of first historical orders meets a first preset condition, determine overall amount distribution of the user based on the first historical orders, the first preset condition indicating that the order quantity of first historical orders is less than or equal to a first preset threshold and is greater than a second preset threshold, and the second preset threshold being less than the first preset threshold; and
an eighth determining unit 816 configured to determine the first amount distribution of the user based on the overall amount distribution determined by the seventh determining unit 815.

In an embodiment, the apparatus may further include:
an analysis module 86 configured to: if the order quantity of first historical orders meets a second preset condition, analyze region amount distribution of a region at which the user is located, the second preset condition indicating that the order quantity of first historical orders is less than the second preset threshold.
The first determining module 81 is configured to determine the first amount distribution of the user based on the region amount distribution obtained through analysis by the analysis module 86.
In an embodiment, the apparatus may further include:

a fifth determining module 87 configured to determine an order corresponding to each transaction amount and an ordering time point of each order for the overall amount distribution; and
a second decay module 88 configured to perform time decay on each order based on the ordering time point of each order. The seventh determining unit 815 may be configured to determine, based on an order quantity corresponding to each transaction amount on which the time decay is performed by the second decay module 88, the first amount distribution corresponding to the user.

In an embodiment, the second determining module 82 includes:

a second calculation unit 821 configured to calculate an order quantity of second historical orders;
a third analysis unit 822 configured to: if the order quantity of second historical orders that is obtained by the second calculation unit 821 meets a third preset condition, analyze, based on an amount of the second historical orders, the second amount distribution corresponding to the merchant, the third preset condition indicating that the order quantity of second historical orders is greater than or equal to a third threshold;
a ninth determining unit 823 configured to: if the order quantity of second historical orders that is obtained by the second calculation unit 821 meets a fourth preset condition, determine a group to which the merchant belongs, the fourth preset condition indicating that the order quantity of second historical orders is less than the third threshold; and
a tenth determining unit 824 configured to: determine the second amount distribution of the merchant based on amount distribution of a merchant belonging to a same group to which the merchant belongs.

In an embodiment, the apparatus may further include:
a merchant recommendation module 89 configured to recommend, based on the similarity determined by the third determining module 83, a merchant matching the user to the user.
In an embodiment, the merchant recommendation module 89 may include:

a comparing unit 891 configured to compare the similarity with a fourth preset threshold; and
a recommending unit 892 configured to: when a comparing result obtained by the comparing unit 891 indicates that the similarity is greater than the fourth preset threshold, determine that the merchant matches the user, and recommend the merchant to the user.

The implementation of the functions and effects of the various units in the above-described apparatus is described in detail in the implementation of the corresponding steps in the above-described method and will not be described in detail herein.

After considering the specification and practicing the present disclosure, a person skilled in the art would easily conceive of other implementations of this application. This application is intended to cover any variation, use, or adaptive change of this application. These variations, uses, or adaptive changes follow the general principles of this application and include common general knowledge or common technical means in the art that are not disclosed in this application. The specification and the embodiments are considered as merely exemplary, and the real scope and spirit of this application are pointed out in the following claims.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one ..." does not exclude other same elements in the process, method, article or device which include the element.

The foregoing descriptions are merely exemplary embodiments of this application, but are not intended to limit this application. Any modification, equivalent replacement, or improvement made without departing from the spirit and principle of this application should fall within the protection scope of this application.

**Claims**

1. A method for determining a similarity between a user and a merchant, comprising:

   determining first amount distribution of the user based on first historical orders of the user;
   determining second amount distribution of the merchant based on second historical orders of the merchant; and
   determining a similarity between the user and the merchant based on the first amount distribution and the second amount distribution.

2. The method according to claim 1, wherein the determining a similarity between the user and the merchant based on the first amount distribution and the second amount distribution comprises:

   determining first probability density distribution of the user based on the first amount distribution;
   determining second probability density distribution of the merchant based on the second amount distribution; and
   determining the similarity between the user and the merchant based on the first probability density distribution and the second probability density distribution.

3. The method according to claim 2, wherein the determining the similarity between the user and the merchant based on the first probability density distribution and the second probability density distribution comprises:

   determining an overlapping area between the first probability density distribution and the second probability density distribution; and
   determining the similarity between the user and the merchant based on the overlapping area.

4. The method according to claim 3, wherein the determining the similarity between the user and the merchant based on the overlapping area comprises:

   determining first confidence of the user and second confidence of the merchant; and
   determining the similarity between the user and the merchant based on the overlapping area, the first confidence, and the second confidence.

5. The method according to claim 1, wherein the determining first amount distribution of the user based on first historical orders of the user comprises:

   grouping the first historical orders to obtain at least one first group corresponding to the first historical orders;
   analyzing an transaction amount of each of the first groups to obtain amount distribution of each of the first groups; and
   determining the first amount distribution of the user based on the amount distribution of each of the first groups.

6. The method according to claim 5, wherein the determining the first amount distribution of the user based on the amount distribution of each of the first groups comprises:

determining a second group to which the merchant belongs; and
determining, as the first amount distribution of the user, first amount distribution of a first group that is the same as the second group.

7. The method according to claim 5, further comprising:

determining an order corresponding to each transaction amount in the first group and an ordering time point of each order for the amount distribution of each of the first groups; and
performing time decay on the order corresponding to each transaction amount in the first group based on the ordering time point of each order

8. The method according to claim 1, wherein the determining first amount distribution of the user based on first historical orders of the user comprises:

calculating an order quantity of first historical orders;
if the order quantity of first historical orders meets a first preset condition, determining overall amount distribution of the user based on the first historical orders; and
determining the first amount distribution of the user based on the overall amount distribution.

9. The method according to claim 8, further comprising:

if the order quantity of first historical orders meets a second preset condition, analyzing region amount distribution of a region at which the user is located; and
determining the first amount distribution of the user based on the region amount distribution.

10. The method according to claim 8, further comprising:

determining an order corresponding to each transaction amount and an ordering time point of each order for the overall amount distribution; and
performing time decay on the order corresponding to each transaction amount based on the ordering time point of each order.

11. The method according to claim 1, wherein the determining second amount distribution of the merchant comprises:

calculating an order quantity of second historical orders; and
if the order quantity of second historical orders meets a third preset condition, analyzing, based on an amount of the second historical orders, the second amount distribution corresponding to the merchant; or
if the order quantity of second historical orders meets a fourth preset condition, determining the second amount distribution of the merchant based on amount distribution of a merchant belonging to a same group to which the merchant belongs.

12. The method according to any of claims 1 to 11, further comprising:
recommending a matching merchant to the user based on the similarity.

13. An apparatus for determining a similarity between a user and a merchant, comprising:

a first determining module configured to determine first amount distribution of the user based on first historical orders of the user;
a second determining module configured to determine second amount distribution of the merchant based on second historical orders of the merchant; and
a third determining module configured to determine a similarity between the user and the merchant based on the first amount distribution determined by the first determining module and the second amount distribution determined by the second determining module.

14. A computer readable storage medium storing a computer executable instruction that, when invoked and executed by a processor, causes the processor to perform the method for determining a similarity between a user and a merchant according to any of claims 1 to 12.

15. An electronic device, comprising:

a processor; and
a memory configured to store an instruction executed by the processor, wherein
the processor is configured to perform the method for determining a similarity between a user and a merchant according to any of claims 1 to 12.

Determine first amount distribution of a user based on first historical orders of the user — 101

Determine second amount distribution of a merchant based on second historical orders of the merchant — 102

Determine a similarity between the user and the merchant based on the first amount distribution and the second amount distribution — 103

FIG. 1

Determine first probability density distribution of a user based on first amount distribution — 201

Determine second probability density distribution of a merchant based on second amount distribution — 202

Determine a similarity between the user and the merchant based on the first probability density distribution and the second probability density distribution — 203

FIG. 2A

Probability density

FIG. 2B

FIG. 3

Determine a second group to which a merchant belongs 401

Group first historical orders to obtain at least one first group corresponding to the first historical orders 402

Determine whether the at least one first group includes a group that is the same as the second group 403

No

Yes

Determine, as first amount distribution of a user, amount distribution of a first group that is the same as the second group 404

Determine the first amount distribution of the user based on overall amount distribution 405

FIG. 4

Obtain an order quantity of the second historical orders through statistics — 501

If the order quantity of second historical orders meets a third preset condition, obtain second amount distribution through analysis of amounts of the second historical orders — 502

If the order quantity of second historical orders meets a fourth preset condition, determine a group to which a merchant belongs — 503

Determine the second amount distribution of the merchant based on amount distribution of a merchant belonging to a same group to which the merchant belongs — 504

FIG. 5

| Determine first amount distribution of a user based on first historical orders of the user | 601 |

↓

| Determine second amount distribution of a merchant based on second historical orders of the merchant | 602 |

↓

| Determine a similarity between the user and the merchant based on the first amount distribution and the second amount distribution | 603 |

↓

| Compare the similarity with a fourth preset threshold | 604 |

↓

| When the similarity is greater than the fourth preset threshold, determine that the merchant matches the user, and recommend the merchant to the user | 605 |

FIG. 6

Processor — 710

Internal bus — 750

Network interface — 730

Memory — 740

Apparatus for determining a similarity between a user and a merchant

Machine readable storage medium — 720

Apparatus for determining a similarity between a user and a merchant

Electronic device 700

FIG. 7

81

First determining module

83

Third determining module

82

Second determining module

FIG. 8

821

Second caculation unit

84

Fourth determining module

822

Third analysis unit

82

85

First decay module

823

Ninth determining unit

81

824

Tenth determining unit

811

Fourth determining unit

Second determining module

812

First analysis unit

83

89

813

Fifth determining unit

831

First determining unit

891

Comparing unit

87

Fifth determining module

814

Sixth determining unit

833

Third determining unit

892

Recommending unit

88

Second decay module

815

Seventh determining unit

832

Second determining unit

Merchant recommendation module

816

Eighth determining unit

Third determining module

First determining module

86

Analysis module

Seventh determining module

88

Sixth determining module

87

FIG. 9

## INTERNATIONAL SEARCH REPORT

| International application No. |
|---|
| **PCT/CN2017/116878** |

**A. CLASSIFICATION OF SUBJECT MATTER**

G06Q 30/06(2012.01)i

According to International Patent Classification (IPC) or to both national classification and IPC

**B. FIELDS SEARCHED**

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNABS, SIPOABS, CNTXT, DWPI, CNKI: 买方, 卖方, 用户, 消费者, 销售方, 商户, 相似, 匹配, 置信度, 概率密度, 分组, purchaser, bargainor, user, customer, seller, similarity, match, confidence, probability density, grouping

**C. DOCUMENTS CONSIDERED TO BE RELEVANT**

| Category* | Citation of document, with indication, where appropriate, of the relevant passages | Relevant to claim No. |
|---|---|---|
| X | CN 103366286 A (FUJIAN JIANGXIA UNIVERSITY) 23 October 2013 (2013-10-23) description, page 6, paragraph 3 to page 15, paragraph 2 | 1, 12-15 |
| A | CN 103366286 A (FUJIAN JIANGXIA UNIVERSITY) 23 October 2013 (2013-10-23) entire document | 2-11 |
| A | CN 105894312 A (BEIJING FEINANSI FINANCIAL PLANNING CENTER CO., LTD.) 24 August 2016 (2016-08-24) entire document | 1-15 |
| A | CN 106779843 A (CHINA UNIONPAY CO., LTD.) 31 May 2017 (2017-05-31) entire document | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2018** | **28 June 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2017/116878**

| Patent document cited in search report | | | Publication date (day/month/year) | Patent family member(s) | Publication date (day/month/year) |
|---|---|---|---|---|---|
| CN | 103366286 | A | 23 October 2013 | None | |
| CN | 105894312 | A | 24 August 2016 | None | |
| CN | 106779843 | A | 31 May 2017 | None | |

Form PCT/ISA/210 (patent family annex) (January 2015)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710906602